# EUROPEAN PATENT APPLICATION

(11) **EP 4 668 430 A1**
(43) Date of publication of application: **24.12.2025**
(21) Application number: 25175005.5
(22) Date of filing: 08.05.2025
(51) Int. Cl.: H01M 50/204, H01M 50/282, H01M 50/342, H01M 50/35, H01M 50/367, H01M 10/658

(54) **POWER BATTERY SYSTEM AND ITS POWER BATTERY MODULE**

(30) Priority: 20.06.2024 CN 202421424615 U; 20.06.2024 CN 202421424630 U
(71) Applicant: Eve Energy Co., Ltd., Huizhou, Guangdong 516006 (CN)
(72) Inventor: WU, Shenqiong, Huizhou, Guangdong, 516006 (CN)
(74) Representative: Herrero & Asociados, S.L.

(57) **Abstract**

A power battery system (1000) and its power battery module (100) are provided. The power battery module (100) includes a plurality of cells (18), a plastic bracket (11) and a sealing cover plate (12). The plurality of cells (18) are electrically connected to form a battery group (180). At least one end portion of the cell (18) is provided with a pressure relief valve (181). The plastic bracket (11) is provided on at least one side of the battery group (180). The end portion of each cell (18) provided with the pressure relief valve (181) is arranged on the plastic bracket (11). The plastic bracket (11) is provided with pressure relief portions (111) corresponding to the pressure relief valves (181) of the cells (18). The sealing cover plate (12) covers the plastic bracket (11). The plastic bracket (11) cooperates with the sealing cover plate (12) to form a pressure relief cavity (13). An inner wall of the pressure relief cavity (13) is formed with a pressure relief protective layer (14) that is made of heat insulating materials.

## Description

### TECHNICAL FIELD

The present disclosure relates to the field of battery technologies, and in particular, to a power battery system and its power battery module.

### BACKGROUND

Power batteries, i.e. storage batteries for providing power source for tools such as electric vehicles and electric trains, are core components of new energy vehicles, and are an important direction for future energy conversion.

In battery packs of related technologies, one side of a cell bracket away from cells forms a pressure relief cavity together with a bottom and an inner wall of a battery box. The pressure relief cavity is in communication with the outside. One side of the cell bracket facing the bottom of the battery box is provided with a barrier film for blocking foaming adhesive, so as to prevent the foaming adhesive from entering the pressure relief cavity. When thermal runaway occurs in a cell, high-temperature and high-pressure substances are released from a pressure relief valve at one end of the cell. Due to the pressure exerted by the high-temperature and high-pressure substances on the foaming adhesive inside an exhaust hole of the cell bracket and the barrier film, is greater than the compressive strength of the barrier film and the adhesive inside the exhaust hole, causing the barrier film and the foaming adhesive in the exhaust hole to be broken, and then causing the high-temperature and high-pressure substances to enter the pressure relief cavity through the exhaust hole, and finally be discharged outside the battery box of the battery pack through a box explosion-proof valve in communication with the pressure relief cavity.

In the above structural design, due to a depth dimension of the pressure relief cavity along a central axis of the cell is short, the high-temperature and high-pressure substances entering the pressure relief cavity will inevitably cause thermal shock to the chamber wall, causing damage to the pressure relief cavity, thereby resulting in failure of the pressure relief function of the pressure relief cavity and the function of guiding the discharge of the sprays.

### SUMMARY

According to a first aspect, the present disclosure provides a power battery module, which includes a plurality of cells, a plastic bracket and a sealing cover plate. The plurality of cells are electrically connected to form a battery group. At least one end portion of the cell is provided with a pressure relief valve. The plastic bracket is provided on at least one side of the battery group. The end portion of each cell that is provided with the pressure relief valve is arranged on the plastic bracket. The plastic bracket is provided with pressure relief portions corresponding to the pressure relief valves of the cells. The sealing cover plate covers the plastic bracket. The plastic bracket cooperates with the sealing cover plate to form a pressure relief cavity. An inner wall of the pressure relief cavity is formed with a pressure relief protective layer that is made of a thermal insulating materials.

According to a second aspect, the present disclosure provides a power battery system, which includes a box and a plurality of the foregoing power battery modules arranged in the box.

The power battery module provided in the present disclosure skillfully forms a pressure relief protective layer in a pressure relief cavity, thereby effectively protecting the plastic bracket and the sealing cover plate from damage caused by high-pressure thermal shock, to ensure the effectiveness of the pressure relief cavity, so that high-temperature and high-pressure sprays are stably discharged from the power battery module, thereby effectively reducing a risk of thermal spreading of the power battery modules, and solving problems that an existing pressure relief cavity is vulnerable to damage and failure due to thermal impact of high-temperature and high-pressure sprays. In addition, because the plastic bracket covers the sealing cover plate, the plastic bracket helps to form the pressure relief protective layer on the inner wall of the pressure relief cavity, thereby reducing processing difficulty and processing costs.

### BRIEF DESCRIPTION OF THE DRAWINGS

FIG. 1 is an exploded schematic diagram of an entire structure of a power battery module provided in some embodiments of the present disclosure;
FIG. 2 is an exploded schematic diagram of a partial structure of a power battery module provided in some embodiments of the present disclosure;
FIG. 3 is a top view schematic diagram of a power battery module provided in some embodiments of the present disclosure;
FIG. 4 is a cross-sectional schematic diagram of the structure shown in FIG. 3 taken along line C-C;
FIG. 5 is an enlarged schematic diagram of a partial structure at region B shown in FIG. 4;
FIG. 6 is an enlarged schematic diagram of a partial structure at region C shown in FIG. 4;
FIG. 7 is an exploded schematic diagram of an entire structure of a power battery system provided in some embodiments of the present disclosure;
FIG. 8 is a top structural schematic diagram of the power battery system provided by some embodiments of the present disclosure after a top shell of a battery box is removed, in which an explosion-proof valve is connected to a structural cover plate by means of a thread connection;
FIG. 9 is a cross-sectional schematic diagram of the structure shown in FIG. 8 taken along line A-A;
FIG. 10 is a structural schematic diagram of the explosion-proof valve and the structural cover plate shown in FIG. 8 in an exploded state viewed from a first perspective;
FIG. 11 is a structural schematic diagram of the explosion-proof valve and the structural cover plate shown in FIG. 8 in an exploded state viewed from a second perspective;
FIG. 12 is another top structural schematic diagram of a power battery system provided by some embodiments of the present disclosure after a top shell of a battery box is removed, in which a structural cover plate is connected to the battery box by means of a flange plate;
FIG. 13 is a cross-sectional schematic diagram of the structure shown in FIG. 12 taken along line B-B;
FIG. 14 is a structural schematic diagram of the explosion-proof valve and the structural cover plate shown in FIG. 12 in an exploded state viewed from a first perspective;
FIG. 15 is a structural schematic diagram of the explosion-proof valve and the structural cover plate shown in FIG. 12 in an exploded state viewed from a second perspective.

Reference numerals: 1000, power battery system; 100, power battery module; 11, plastic bracket; 111, pressure relief portion; 112, inner surface; 113, outer surface; 114, peripheral surface; 12, sealing cover plate; 121, inner surface; 122, outer surface; 123, peripheral surface; 13, pressure relief cavity; 14, pressure relief protective layer; 141, cover plate protective layer; 142, bracket protective layer; 143, transition protective layer; 151, snap protrusion; 152, snap recess; 16, sealing connector; 17, foam colloid; 18, cell; 180, battery group; 181, pressure relief valve; 19, pressure relief communication pipe; 200, box; 21, assembly hole; 22, threaded hole; 300, pressure relief assembly; 31, guide pipe; 311, flow-collecting section; 312, flow-converging section; 32, explosion-proof valve; 321, extension pipe; 322, threaded hole; 323, bolt; 33, structural cover plate; 331, pressure relief pipe; 332, flange plate; 333, screw hole; 334, position-limiting protrusion; 36, sealing structure; 37, flow-converging cavity; 38, sealing strip; 381, avoidance hole; 39, U-shaped pipe.

### DETAILED DESCRIPTION

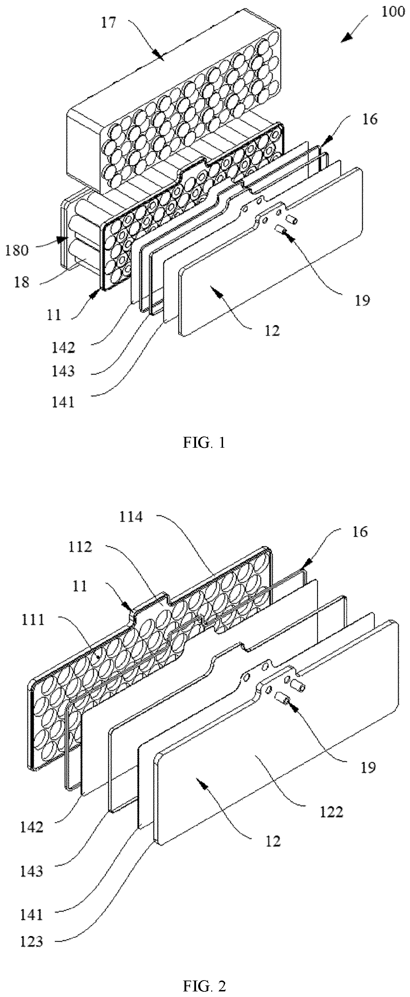

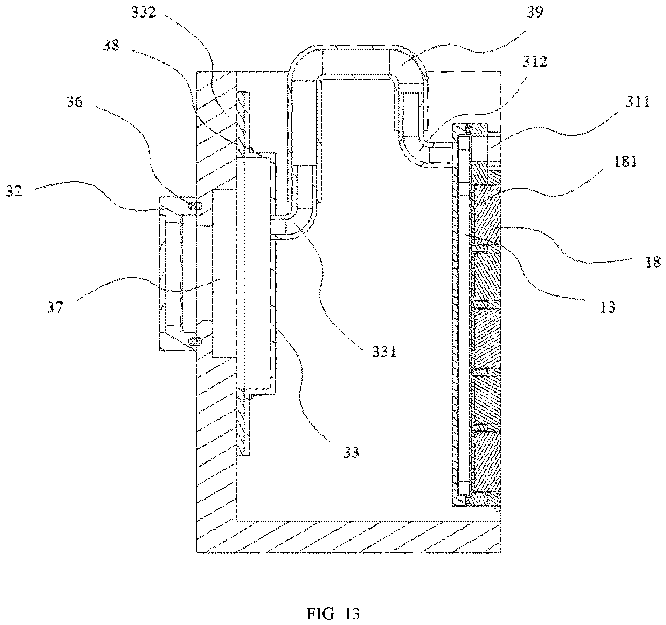

Please refer to FIG. 1 and FIG. 2, the embodiments of the present disclosure disclose a power battery module 100, which includes a plastic bracket 11, a sealing cover plate 12, and a plurality of cells 18. The plurality of cells 18 are electrically connected to form a battery group 180. At least one end portion of the cell 18 is provided with a pressure relief valve 181 (as shown in FIG. 13). The plastic bracket 11 is provided on at least one side of the battery group 180, and the end portion of each cell 18 that is provided with the pressure relief valve 181 is arranged on the plastic bracket 11. The plastic bracket 11 is provided with pressure relief portions 111 corresponding to the pressure relief valves 181. The pressure relief portion 111 may be an exhaust hole or a weakened portion.

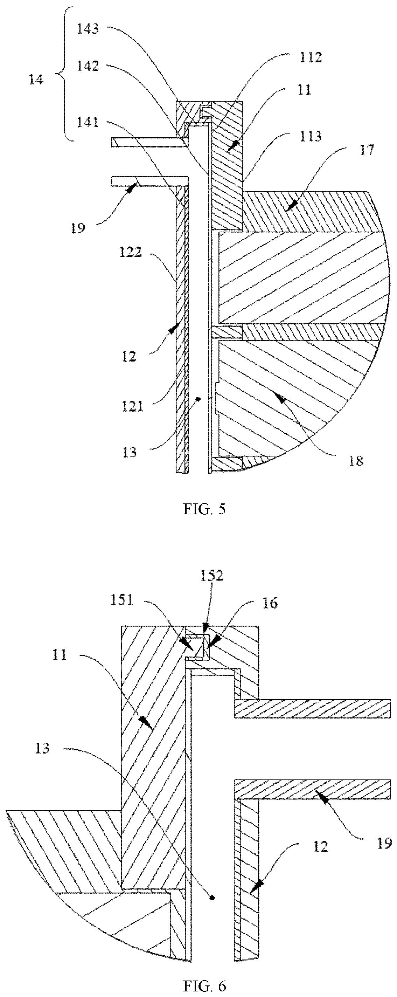

A shape of the sealing cover plate 12 is adapted to a shape of the plastic bracket 11. As shown in FIG. 2 and FIG. 5, the sealing cover plate 12 is provided with an inner surface 121, an outer surface 122 and a peripheral surface 123. The inner surface 121 and the outer surface 122 are arranged opposite to each other, and the peripheral surface 123 is connected between the inner surface 121 and the outer surface 122.

The plastic bracket 11 is provided with an inner surface 112, an outer surface 113 and a peripheral surface 114. The inner surface 112 and the outer surface 113 are arranged opposite to each other, and the peripheral surface 114 is connected between the inner surface 112 and the outer surface 113. The outer surface 113 of the plastic bracket 11 is a surface of the plastic bracket 11 close to the cells 18. The sealing cover plate 12 covers the plastic bracket 11. The inner surface 112 of the plastic bracket 11 and the inner surface 121 of the sealing cover plate 12 cooperate to form a pressure relief cavity 13. A vertical distance between the inner surface 112 of the plastic bracket 11 and the inner surface 121 of the sealing cover plate 12 is a depth of the pressure relief cavity 13. When the pressure relief valve 180 of the cell 18 is opened in a thermal runaway state, it connects the cell 18 to the pressure relief cavity 13.

In some embodiments, as shown in FIGs. 1, 2 and 5, an inner wall of the pressure relief cavity 13 is formed with a pressure relief protective layer 4 that is made of thermal insulation materials. The thermal insulation materials herein may be preferably mica material having high temperature resistance properties. The pressure relief protective layer 14 is preferably formed on the inner wall of the pressure relief cavity 13 by spraying. Of course, a snap-fit connection or an adhesive connection may be selected for arranging the pressure relief protective layer 14 to the inner wall of the pressure relief cavity 13. In this way, when high-temperature and high-pressure substances generated by the cell 18 in the thermal runaway state are injected into the pressure relief cavity 13, impact will be applied to the pressure relief protective layer 14, so that the high-temperature and high-pressure substances will not directly impact on the wall of the pressure relief cavity 13, preventing a large amount of heat and impact force from damaging the plastic bracket 11 and/or the sealing cover plate 12, thereby reducing a risk of failure of the plastic bracket 11 and/or the sealing cover plate 12, and ensuring that the high-temperature and high-pressure substances can be discharged outside the power battery module 100 under the guidance of the pressure relief cavity 13.

In some embodiments, the pressure relief protective layer 14 includes a cover plate protective layer 141. The cover plate protective layer 141 is provided on the inner surface 121 of the sealing cover plate 12, and the cover plate protective layer 141 covers at least an end portion of each of the cells 18, so that when thermal runaway occurs in any one of the cells 18, the high-temperature and high-pressure substances released by the cell 18 can be prevented from impacting on the inner surface 121 of the sealing cover plate 12.

In some embodiments, the pressure relief protective layer 14 further includes a bracket protective layer 142. The bracket protective layer 142 is provided on the inner surface 112 of the plastic bracket 11, and the bracket protective layer 142 covers at least the end portion of each of the cells 18. Of course, the bracket protective layer 142 may also cover an entire inner surface 112 of the plastic bracket 11.

In this way, when the high-temperature and high-pressure substances impact the cover plate protection layer 141 and rebound toward the plastic bracket 11, under the action of the bracket protective layer 142, the high-temperature and high-pressure substances will not directly generate a thermal impact on the plastic bracket 11, thereby protecting the plastic bracket 11 from being damaged.

It should be noted that, the power battery module 100 further includes foam colloids 17, which are polyurethane or organic silicon glue, and are not specifically limited herein. The foam colloids 17 are filled between adjacent cells 18, and the foam colloids 17 wrap the peripheries of the cells 18 and the pressure relief valves 181 of the cells 18.

Since each cell 18 of the power battery module 100 is completely wrapped by the foam colloids 17, the foam colloids 17 with good flame-retardant and thermal-insulation capability can be used to prevent heat, substances, flames, etc. generated by any one of the cells 18 due to thermal runaway from being transferred to its adjacent cells 18. At the same time, under the action of the foam colloids 17, the plurality of cells 18 can be compactly connected together.

In some embodiments, the foam colloids 17 are also filled between the plastic bracket 11 and the cells 18, so as to seal assembly gaps between the plastic bracket 11 and the cells 18, and wrap the pressure relief valves 181 of the cells 18, thereby preventing the pressure relief valves 181 from being exposed. At the same time, under the support of the bracket protective layer 142, the foam colloids 17 can be prevented from entering the pressure relief cavity 13 from the pressure relief portion 111, such as the exhaust holes 111 or the weakened portions of the plastic bracket 11.

When thermal runaway occurs in the cell 18, the sprays released from the pressure relief valve 181 of the cell 18 squeeze and break through the foam colloid 17 close to the pressure relief valve 181 and the bracket protective layer 142, and then enter the pressure relief cavity 13. Since the bracket protective layer 142 seals and blocks the pressure relief portion 111, such as the exhaust holes or weakened portions corresponding to the other cells 18, thereby preventing other cells 18 adjacent to or close to the cell 18 experiencing thermal runaway from being influenced by the high-temperature and high-pressure substances.

In some embodiments, please continue to refer to FIGs. 1, 2 and 5, the pressure relief protective layer 14 further includes a transition protective layer 143. The transition protective layer 143 is respectively connected between the cover plate protective layer 141 and the bracket protective layer 142.

Specifically, the transition protective layer 143 may be provided on the plastic bracket 11, the transition protective layer 143 may also be provided on the sealing cover plate 12, or both the plastic bracket 11 and the sealing cover plate 12 are provided with the transition protective layer 143. In this way, through the cooperation of the cover plate protection layer 141, the bracket protective layer 142 and the transition protective layer 143, during the transmission and flow of the high-temperature and high-pressure substances along an extension direction of the pressure relief cavity 13, a large amount of heat carried by the sprays can be completely blocked by the pressure relief protective layer 14, reducing the risk of thermal deformation or melting of the plastic bracket 11 and the sealing cover plate 12, thereby well ensuring the effectiveness of the plastic bracket 11 and the sealing cover plate 12 during use.

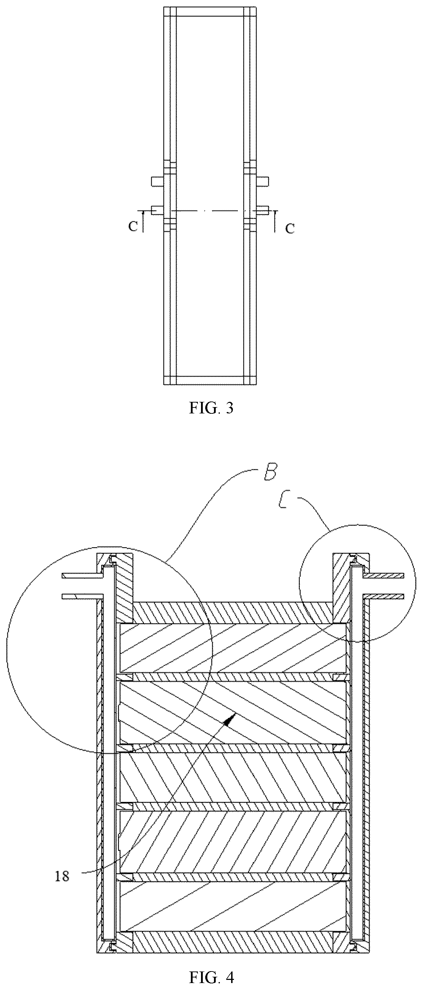

In some embodiments, please refer to FIG. 1 to FIG. 6, the power battery module 100 further includes a pressure relief communication pipe 19 provided on the sealing cover plate 12. An interior of the pressure relief cavity 13 is in communication with an exterior of the pressure relief cavity 13 through the pressure relief communication pipe 19, so that the high-temperature and high-pressure substances flowing inside the pressure relief cavity 13 can be released outside the pressure relief cavity 13. That is, the pressure relief communication pipe 19 can guide the high-temperature and high-pressure substances away from the power battery module 100, thereby avoiding the influence of a large amount of heat on the function and state of the power battery module 100.

In some embodiments, please refer to FIG. 5 and FIG. 6, the plastic bracket 11 is provided with a snap protrusion 151, which extends along a peripheral direction of the inner surface 112 of the plastic bracket 11. The sealing cover plate 12 is provided with a snap recess 152 corresponding to the snap protrusion 151. The snap protrusion 151 is snap-fitted into the snap recess 152. In this way, the purpose of detachable connection between the plastic bracket 11 and the sealing cover plate 12 can be achieved, and the pressure relief protective layer 14 can also be processed and formed inside the pressure relief cavity 13, thereby reducing the processing difficulty and the process cost for forming the pressure relief protective layer 14. At the same time, quick positioning and secure mounting of the plastic bracket 11 and the sealing cover plate 12 are also achieved during an assembly process.

In other embodiments, the sealing cover plate 12 is provided with a snap protrusion 151, the plastic bracket 11 is provided with a snap recess 152 corresponding to the snap protrusion 151, and the snap protrusion 151 is snap-fitted into the snap recess 152.

In some embodiments, a sealing connector 16 is arranged between the snap protrusion 151 and the snap recess 152. The sealing connector 16 extends along a lengthwise direction of the snap recess 152, thereby sealing the assembly gap between the snap protrusion 151 and the snap recess 152 and improving the sealing performance of the pressure relief cavity 13.

It should be noted that, the sealing cover plate 12 may be made of either plastic or a metal materials. The foregoing cells 18 are cylindrical batteries, and certainly, may also be square batteries. By taking the cell 18 being a cylindrical cell as an example, the cell 18 has a cell positive electrode end and a cell negative electrode end that are oppositely arranged. The pressure relief valve 181 of the cell 18 may be optionally located at the cell positive electrode end, while in other designs, the pressure relief valve 181 of the cell 18 may also be optionally located at the cell negative electrode end, or both the cell positive electrode end and the cell negative electrode end of the cell 18 are provided with the pressure relief valve 181.

Referring again to FIG. 1, the battery group 180 includes a plurality of battery-row modules. Each battery-row module includes a plurality of cells 8 arranged along a short side direction of the plastic bracket 11. The plurality of battery-row modules are arranged along a long side direction of the plastic bracket 11. The cell positive electrode ends of the cells 18 in the same battery-row module are all located at the same side of the battery group 180, and the cell positive electrode ends of the cells 18 of two adjacent battery-row modules are located at two opposite sides of the battery group 180.

In some embodiments, two opposite sides of the battery group 180 are provided with the plastic brackets 11, and each of the plastic brackets 11 is provided with the sealing cover plate 12. The plastic brackets 11 and the corresponding sealing cover plates 12 form the pressure relief cavities 13 at the two opposite sides of the battery group 180. In some embodiments, each plastic bracket 11 is provided with the pressure relief portions 111, such as the exhaust holes or weakened portions corresponding to the pressure relief valves 181 of the cells 18. Two opposite ends of each cell 18 are both provided on corresponding plastic brackets 11.

In this way, regardless of whether the pressure relief valve 181 of the cell 18 is arranged at the cell positive electrode end of the cell 18 or at the cell negative electrode end of the cell 18, regardless of whether the cell positive electrode ends of the cells 18 of two adjacent battery-row modules are arranged in a staggered manner or arranged side by side, in the case where thermal runaway occurs in any one of the cells, high-temperature and high-pressure substances can be released into the pressure relief cavity 13, thereby improving the flexibility of battery design. In addition, a pressure relief protective layer 14 is formed inside the pressure relief cavity 13, so that the high-temperature and high-pressure substances can be stably guided and discharged outside the pressure relief cavity 13, thereby effectively improving the usage safety and usage stability of the power battery module 100.

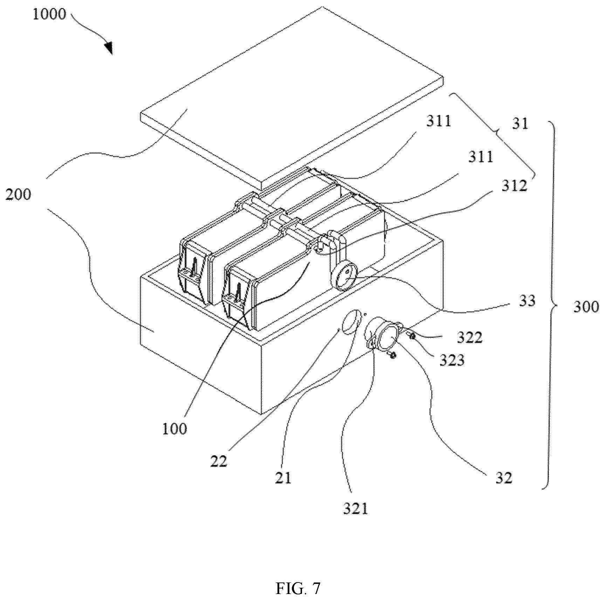

Based on the structure and connection relationship of the above-mentioned power battery module, please refer to FIG. 7, the embodiments of the present disclosure further provide a power battery system 1000, i.e. a battery pack, which includes a box 200 and a plurality of the above-mentioned power battery modules 100. The plurality of power battery modules 100 are arranged in the box 200.

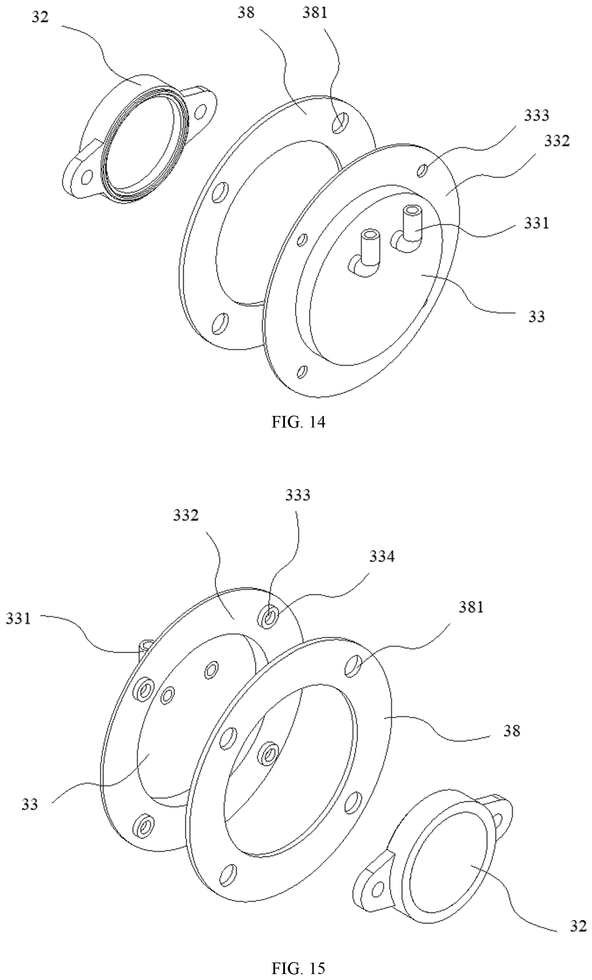

Please refer to FIG. 7 to FIG. 15, the power battery system 1000 further includes a pressure relief assembly 300. The pressure relief assembly 300 is configured to communicate the pressure relief cavities 13 of the plurality of power battery modules 100 with an exterior of the box 200/the power battery system 1000.

Specifically, the pressure relief assembly 300 includes a guide pipe 31 and an explosion-proof valve 32. The guide pipe 31 includes a plurality of flow-collecting sections 311 and at least one flow-converging section 312. The pressure relief cavities 13 of the plurality of power battery modules 100 are respectively in communication with the plurality of flow-collecting sections 311. For example, the pressure relief cavity 13 of the power battery module 100 may be communicated with a corresponding flow-collecting section 311 through the pressure relief communication pipe 19. The flow-collecting section 311 is configured to collect thermal runaway substances that may be generated in the pressure relief cavity 13 of the power battery module 100 communicating with the flow-collecting section 311. The flow-converging section 312 is configured to converge the thermal runaway substances collected by the flow-collecting sections 311 and discharge the thermal runaway substances through the explosion-proof valve 32. More specifically, two ends of the flow-collecting section 311 are respectively provided with a first port and a second port. The first port is in communication with the pressure relief cavity 13 of the corresponding power battery module 100, and configured to collect thermal runaway substances generated in the pressure relief cavity 13 of the power battery module 100. The second port is in communication with the flow-converging section 312 and configured to transfer the thermal runaway substances collected by the flow-collecting section 311 to the flow-converging section 312. One end of the explosion-proof valve 32 is in communication with the flow-converging section 312, and the other end is in communication with the exterior of the box 200/the power battery system 1000. The guide pipe 31 is independently assembled on the power battery module 100, and a gap is reserved between both the flow-collecting section 311 and the flow-converging section 312 of the guide pipe 31 and the cells 18 in the power battery system 1000.

A working principle of the above structure is as follows:
When thermal runaway occurs in the power battery module 100, the thermal runaway substances in the pressure relief cavity 13 of the power battery module 100 flows from the first port to the second port of the flow-collecting section 311, and then flows out of the power battery system 1000 through the flow-converging section 312 and the explosion-proof valve 32. Compared with the related technologies in which the thermal runaway substances generated by the power battery module 100 affects other adjacent power battery modules 100 when flowing in the pressure relief cavity 13 of the power battery module 100, the above structure can shorten and control the length of the pressure relief cavity 13 of each power battery module 100 by designing a storage component of the power battery system 1000 to be in the form of a plurality of power battery modules 100; the pressure relief cavities 13 of the plurality of power battery modules 100 are respectively communicated to the flow-converging section 312 of the guide pipe 31 by using the plurality of flow-collecting sections 311, in this way, the pressure relief cavities 13 of the plurality of power battery modules 100 can be isolated. In this way, after thermal runaway occurs in the power battery modules 100, the high-temperature and high-pressure substances directly flow into the guide pipe 31 (the flow-collecting section 311 and the flow-converging section 312) via the relatively short pressure relief cavity 13 inside the power battery module 100, and will not flow through the pressure relief cavities 13 of other adjacent power battery modules 100, thereby greatly reducing the risk and extent of heat spreading, improving the safety performance of the power battery system 1000; in addition, because a gap is reserved between the guide pipe 31 and the power battery module 100, after the thermal runaway substances directly flows into the guide pipe 31, the thermal runaway substances lose contact with the power battery module 100, thereby further reducing the risk and extent of thermal spreading, and improving the safety performance of the power battery system 1000.

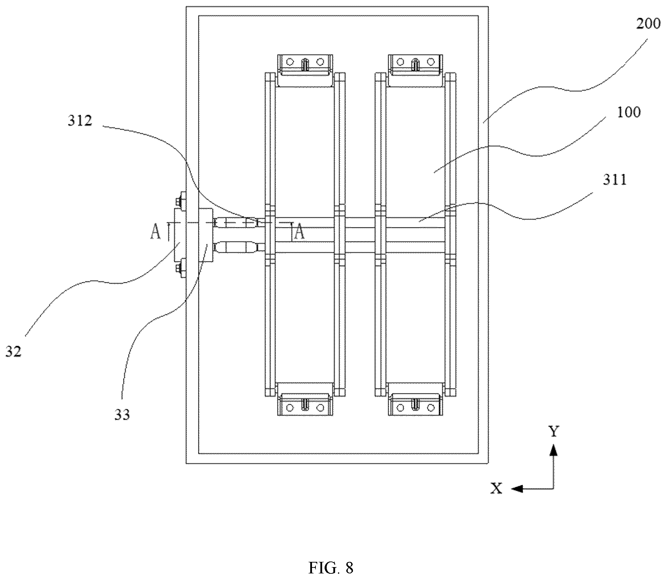

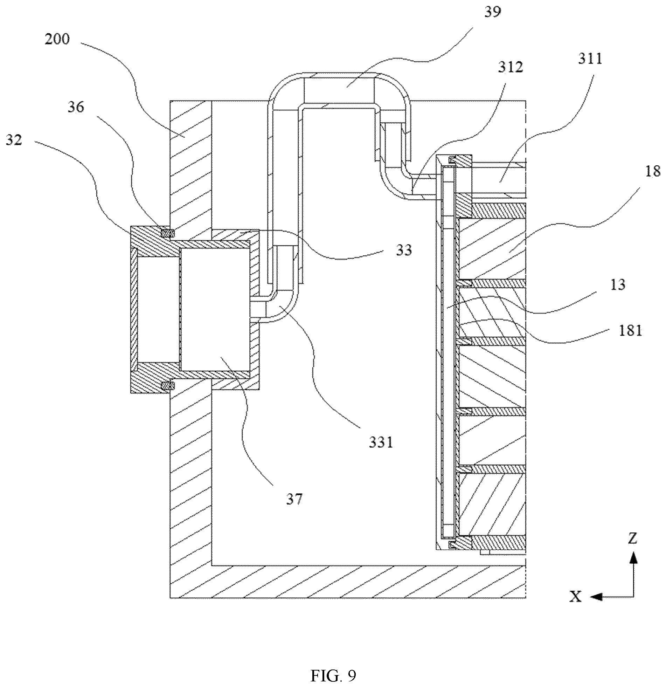

In some embodiments, as shown in FIG. 8 and FIG. 9, the plurality of power battery modules 100 are arranged side by side along a preset direction (for example, a direction X shown in FIG. 8) of the power battery system 1000, the cells 18 of the power battery module 100 extend along the preset direction, and the pressure relief cavity 13 of the power battery module 100 is arranged at one side of the power battery module 100 along the preset direction. One end portion of the cell 18 is provided with the pressure relief valve 181, and the pressure relief valve 181 is in communication with the pressure relief cavity 13. The guide pipe 31 (such as the flow-collecting section 311 or the flow-converging section 312) is arranged above the power battery module 100 along the preset direction. The first port of the flow-collecting section 311 of the guide pipe 31 is in communication with the pressure relief cavity 13.

By means of the communication between the pressure relief cavity 13 of the power battery module 100 and the flow-collecting section 311 of the guide pipe 31, when thermal runaway occurs in the cell 18, the pressure relief assembly 300 of the present disclosure can discharge the thermal runaway substances released into the pressure relief cavity 13 by the pressure relief valve 181 of the cell 18 in which thermal runaway occurs. Due to the fact that the high-temperature and high-pressure substances are directly discharged into the flow-collecting section 311 through the relatively short pressure relief cavity 13, and then discharged outside the power battery system 1000 through the flow-converging section 312 and the explosion-proof valve 32, the risk of thermal spreading in the power battery system 1000 can be reduced.

Please refer to FIG. 7 and FIG. 8 again, in some embodiments, the power battery system 1000 includes N power battery modules 100 (N ≥ 1), and is provided with N flow-collecting sections 311. The first ports of the N flow-collecting sections 311 are in one-to-one communication with the pressure relief cavities 13 of the N power battery modules 100, and the second ports of the N flow-collecting sections 311 are in communication with the flow-converging section 312.

In some embodiments, the guide pipe 31 may include one flow-converging section 312, which is in communication with the second ports of all the flow-collecting sections 311. A check valve or the like is arranged at the first port of each flow-collecting section 311 to prevent the thermal runaway substances released by the power battery module 100 from flowing into another power battery module 100 during the flow towards the explosion-proof valve 32 in the flow-collecting section 311.

In some embodiments, as shown in FIG. 7 and FIG. 8, the guide pipe 31 may include N flow-converging sections 312. The second ports of the N flow-collecting sections 311 are in one-to-one communication with the N flow-collecting sections 312.

In some embodiments, the power battery system 1000 is provided with N power battery modules 100 and N flow-collecting sections 311. Based on this structure, the first ports of the N flow-collecting sections 311 are in one-to-one communication with the pressure relief cavities 13 of the N power battery modules 100. An opening is provided between the first port and the second port of the flow-collecting section 311. In a direction towards the flow-converging section 312, the second port of the flow-collecting section 311 close to the flow-converging section 312 is in communication with the flow-converging section 312, and the second ports of other flow-collecting sections 311 are sequentially communicated with the openings on adjacent flow-collecting sections 311. That is, the second ports of the other flow-collecting sections 311 are indirectly communicated with the flow-converging section 312 through the adjacent flow-collecting sections 311.

Specifically, the first ports of the flow-collecting sections 311 are mounted to the corresponding power battery modules 100 for collecting thermal runaway substances that may be generated in the corresponding power battery modules 100. The opening is provided between the first port and the second port of the flow-collecting section 311, and the opening is configured to communicate with the second port of the adjacent flow-collecting section 311, in order to achieve the sequential communication of the N flow-collecting sections, thereby facilitating the design of the guide pipe 31 and reducing the occupation volume of the pressure relief assembly 300 in the power battery system 1000 at the same time. In these embodiments, a check valve or the like is arranged at the first port of each flow-collecting section 311 to prevent the thermal runaway substances released by the power battery module 100 from flowing into another power battery module 100 during the flow towards the explosion-proof valve 32 in the flow-collecting section 311.

In some embodiments, the explosion-proof valve 32 is directly communicated with the flow-converging section 312, and the flow-collecting section 311 is communicated with the pressure relief cavities 13 of two adjacent power battery modules 100, thereby achieving the collection and discharge of the thermal runaway substances in the case of a plurality of power battery modules 100.

In some embodiments, the flow-converging section 312 of the guide pipe 31 is a main pipe, the flow-collecting section 311 is a branch pipe, the main pipe is arranged above each power battery module 100 along the preset direction, one end of each branch pipe is in communication with the pressure relief cavity 13 of the power battery module 100, and the other end is in communication with the main pipe. The above structure forms a reliable pressure relief pipeline with a simple pipe network structure. Similarly, designers may provide a check valve at one end of the branch pipe connected to the pressure relief cavity 13 according to usage requirements to prevent the thermal runaway substances from flowing into other normal power battery modules 100.

Referring to FIG. 7 again, in some embodiments, in order to facilitate installation of the explosion-proof valve 32, the box 200 of the power battery system 1000 is provided with an assembly hole 21. The explosion-proof valve 32 is mounted in the assembly hole 21 and is configured to communicate inside and outside of the power battery system 1000. In addition, structures such as snap-fit structures and threaded holes for fixing the explosion-proof valve 32 may also be provided near the assembly hole 21. In this embodiment, threaded holes 22 are provided near the assembly hole 21 of the box 200, and the explosion-proof valve 32 is provided with threaded holes 322 corresponding to the threaded holes 22 on the box 200. The fixation of the explosion-proof valve 32 to the box 200 is completed by a bolt 323 passing through the threaded hole 22 provided near the assembly hole 21 and the threaded hole 322 provided on the explosion-proof valve 32.

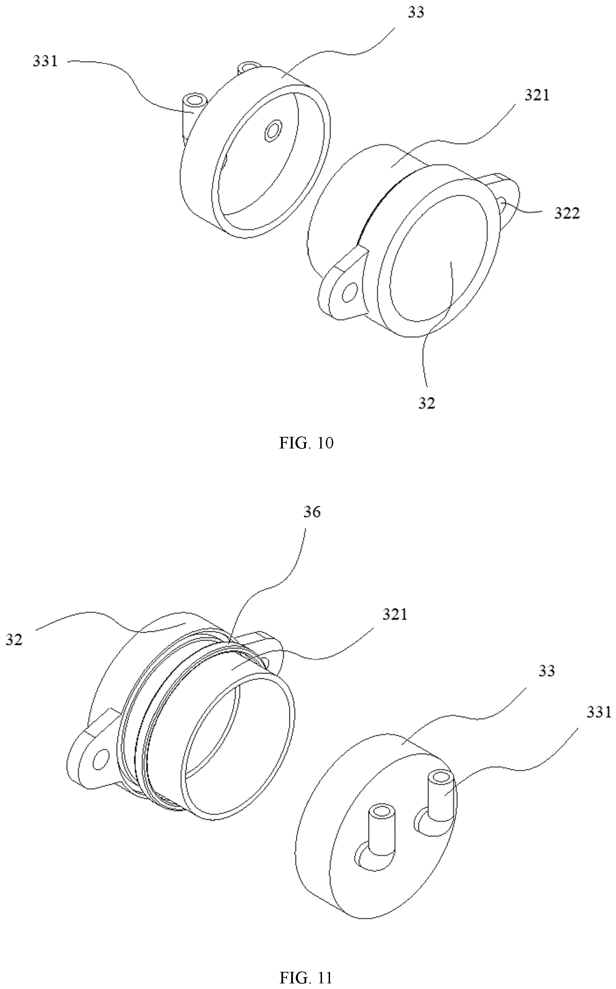

Please refer to FIG. 9 and FIG. 11, in some embodiments, in order to improve the sealing performance of a joint between the explosion-proof valve 32 and the assembly hole 21, a sealing structure 36 is provided at the joint between the explosion-proof valve 32 and the assembly hole 21. The sealing structure 36 can ensure the sealing performance between the explosion-proof valve 32 and the assembly hole 21, and prevent the thermal runaway substances from escaping from the joint between the explosion-proof valve 32 and the assembly hole 21.

Specifically, the sealing structure 36 may be a member or a coating, such as a sealing ring, a sealing strip, or a sealant that can enhance the air tightness at the joint between the explosion-proof valve 32 and the assembly hole 21. In this embodiment, the sealing structure 36 is a sealing ring, which is sleeved on one side of the explosion-proof valve 32 facing the box 200. When the explosion-proof valve 32 is assembled, the sealing ring seals a contact position between the explosion-proof valve 32 and the assembly hole 21, thereby improving the sealing performance of the explosion-proof valve 32 and the assembly hole 21.

Please refer to FIG. 7 to FIG. 11, in some embodiments, in order to facilitate the connection between the explosion-proof valve 32 and the flow-converging section 312, a structural cover plate 33 is provided between the explosion-proof valve 32 and the flow-converging section 312. The structural cover plate 33 is connected to the explosion-proof valve 32, and a flow-converging cavity 37 is formed between the structural cover plate 33 and the explosion-proof valve 32. The flow-converging cavity 37 is configured to initially collecting the thermal runaway substances discharged from the flow-converging section 312. The flow-converging section 312 is in communication with the flow-converging cavity 37 via the structural cover plate 33. With this solution, the structural cover plate 33 can provide a more convenient installation foundation for the communication between the flow-converging section 312 and the explosion-proof valve 32.

In some embodiments, the structural cover plate 33 is provided with a pressure relief pipe 331. One end of the pressure relief pipe 331 is in communication with the flow-converging section 312, and the other end of the pressure relief pipe 331 is in communication with the flow-converging cavity 37. Specifically, the structural cover plate 33 is provided with the pressure relief pipe 331 that facilitates communication with the flow-converging section 312. The flow-converging section 312 is in communication with the pressure relief pipe 331, which facilitates the assembly of the explosion-proof valve 32 and the flow-converging section 312. Certainly, the flow-converging section 312 may also communicate with the pressure relief pipe 331 in an indirect connection manner, for example, in this embodiment, the flow-converging section 312 is in communication with the pressure relief pipe 331 through a U-shaped pipe 39.

On the basis of the above structure, the structure of the explosion-proof valve 32 is mainly divided into two types:
Firstly, please refer to FIG. 7 to FIG. 11, the explosion-proof valve 32 is provided with an extension pipe 321, and the box 200 of the power battery system 1000 is provided with an assembly hole 21. The extension pipe 321 passes through the assembly hole 21 from an outer side of the box 200, and is in a threaded connection with the structural cover plate 33 at an inner side of the box 200. In the above structure, the extension pipe 321 is arranged on the explosion-proof valve 32, and the extension pipe 321 is threaded to the structural cover plate 33 after passing through the assembly hole 21, therefore, the air tightness of the flow-converging cavity 37 formed by the explosion-proof valve 32 and the structural cover plate 33 is better, and the assembly of the explosion-proof valve 32 and the structural cover plate 33 is also more convenient. The threaded connection between the structural cover plate 33 and the extension pipe 321 can be achieved by providing matching threads for the threaded connection between the structural cover plate 33 and the extension pipe 321.

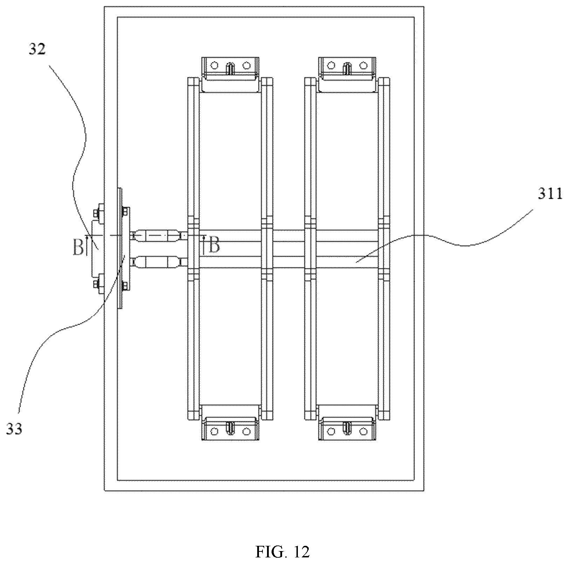

Second, as shown in FIG. 12 to FIG. 15, an outer edge of the structural cover plate 33 extends to form a flange plate 332. The structural cover plate 33 is fixedly connected to the box 200 via the flange plate 332, thereby greatly improving air tightness at the joint between the structural cover plate 33 and the box 200.

In some embodiments, in order to further improve the air tightness of the joint between the structural cover plate 33 and the box 200, a sealing strip 38 is provided between the flange plate 332 and the box 200. The sealing strip 38 is provided on a covering surface of the box 200 along the flange plate 332, and a surface of the flange plate 332 facing the sealing strip 38 is provided with position-limiting protrusions 334. The position-limiting protrusions 334 can control a distance between the flange plate 332 and the box 200, thereby controlling a compression amount of the sealing strip 38 and ensuring the air tightness and stability of the sealing strip 38.

In some embodiments, the flange plate 332 is mounted to the box 200 by bolts. The flange plate 332 is provided with screw holes 333 through which the bolts pass, and the position-limiting protrusion 334 is provided along an aperture edge of the screw hole 333. The sealing strip 38 is provided with avoidance holes 381 at positions corresponding to the screw holes 333, and the position-limiting protrusions 334 are provided to pass through the avoidance holes 381. According to the above structure, the flange plate 332 is provided with the position-limiting protrusions 334 at the screw holes 333, and the sealing strip 38 is correspondingly provided with the avoidance holes 381 for avoiding the position-limiting protrusions 334. The position-limiting protrusions 334 pass through the avoidance holes 381 and abut against the box 200, so that the compression amount of the sealing strip 38 can be controlled, and the problem of excessive compression of the sealing strip 38 can be avoided, thereby improving the sealing performance and stability of the sealing strip 38. In addition, the engagement between the avoidance holes 381 and the position-limiting protrusions 334 also facilitates the positioning and installation of the sealing strip 38.

Of course, the designers can also set the number and positions of the screw holes 333 and correspondingly set the number and positions of the position-limiting protrusions 334 and the avoidance holes 381 according to requirements, thereby improving the stability of the connection between the structural cover plate 33 and the box 200.

In addition, in the present disclosure, a plurality of guide pipes can be provided according to requirements, and the connection method thereof can use one of the described connection methods. In this embodiment, two guide pipes are provided to improve the flux per unit time, thereby improving the safety of the power battery system.

## Claims

1. A power battery module (100), **characterized by** comprising:
a plurality of cells (18); wherein the plurality of cells (18) are electrically connected to form a battery group (180); at least one end portion of the cell (18) is provided with a pressure relief valve (181);
a plastic bracket (11) provided on at least one side of the battery group (180); wherein the end portion of each cell (18) that is provided with the pressure relief valve (181) is arranged on the plastic bracket (11); the plastic bracket (11) is provided with pressure relief portions (111) corresponding to the pressure relief valves (181) of the cells (18); and
a sealing cover plate (12); wherein the sealing cover plate (12) covers the plastic bracket (11), and the plastic bracket (11) cooperates with the sealing cover plate (12) to form a pressure relief cavity (13); wherein an inner wall of the pressure relief cavity (13) is formed with a pressure relief protective layer (14) that is made of thermal insulating materials.

2. The power battery module (100) according to claim 1, **characterized in that** the pressure relief protective layer (14) comprises:
a cover plate protective layer (141) provided on an inner surface (121) of the sealing cover plate (12); and
a bracket protective layer (142) provided on an inner surface (112) of the plastic bracket (11).

3. The power battery module (100) according to claim 2, **characterized in that** the pressure relief protective layer (14) further comprises a transition protective layer (143); wherein the transition protective layer (143) is respectively connected between the cover protective layer (141) and the bracket protective layer (142).

4. The power battery module (100) according to any one of claims 1 to 3, **characterized in that** one of the plastic bracket (11) and the sealing cover plate (12) is provided with a snap protrusion (151), and the other one of the plastic bracket (11) and the sealing cover plate (12) is provided with a snap recess (152); wherein the snap protrusion (151) is snap-fitted into the snap recess (152), so as to achieve a detachable connection between the plastic bracket (11) and the sealing cover plate (12).

5. The power battery module (100) according to claim 1, **characterized in that** the power battery module (100) further comprises a pressure relief communication pipe (19) provided on the sealing cover plate (12); wherein an interior of the pressure relief cavity (13) is in communication with an exterior of the pressure relief cavity (13) through the pressure relief communication pipe (19); or
the power battery module (100) further comprises foam colloids (17); wherein the foam colloids (17) are filled between adjacent cells (18), and between the plastic bracket (11) and the cells (18), and the foam colloids (17) wrap peripheries of the cells (18) and the pressure relief valves (181) of the cells (18).

6. The power battery module (100) according to claim 5, **characterized in that** two opposite sides of the battery group (180) are provided with the plastic brackets (11), and each of the plastic brackets (11) is provided with the sealing cover plate (12); wherein the plastic bracket (11) and the corresponding sealing cover plate (12) form the pressure relief cavities (13) at the two opposite sides of the battery group (180); each plastic bracket (11) is provided with the pressure relief portions (111) corresponding to the pressure relief valves (181) of the cells (18); wherein two opposite ends of each cell (18) are both provided on corresponding plastic brackets (11).

7. A power battery system (1000), **characterized by** comprising:
a box (200); and
a plurality of power battery modules (100) according to any one of claims 1 to 6; wherein the plurality of power battery modules (100) are arranged in the box (200).

8. The power battery system (1000) according to claim 7, **characterized in that** the power battery system (1000) further comprises a pressure relief assembly (300); wherein the pressure relief assembly (300) comprises:
a guide pipe (331) comprising a plurality of flow-collecting sections (311) and at least one flow-converging section (312); wherein the plurality of flow-collecting sections (311) are respectively in communication with the pressure relief cavities (13) of the plurality of power battery modules (100); the flow-collecting section (311) is provided with a first port and a second port, wherein the first port is in communication with the pressure relief cavity (13) of a corresponding power battery module (100), and the second port is in communication with the flow-converging section (312); and
an explosion-proof valve (32), wherein one end of the explosion-proof valve (32) is in communication with the flow-converging section (312), and the other end is in communication with an exterior of the power battery system (1000);
wherein a gap is reserved between both the flow-collecting section (311) and the flow-converging section (312) and the cells (18) in the power battery system (1000).

9. The power battery system (1000) according to claim 8, **characterized in that** the plurality of power battery modules (100) are arranged side by side along a preset direction of the power battery system (1000), the cells (18) of the power battery module (100) extend along the preset direction, and the pressure relief cavity (13) of the power battery module (100) is arranged at one side of the power battery module (100) along the preset direction; wherein one end portion of the cell (18) is provided with the pressure relief valve (181) that is in communication with the pressure relief cavity (13); wherein the guide pipe (31) is arranged above the power battery module (100) along the preset direction.

10. The power battery system (1000) according to claim 8 or 9, **characterized in that** the power battery system (1000) is provided with N power battery modules (100) and N flow-collecting sections (311), wherein N ≥ 1; the first ports of the N flow-collecting sections (311) are in one-to-one communication with the pressure relief cavities (13) of the N power battery modules (100);
the second ports of the N flow-collecting sections (311) are in communication with the flow-converging section (312); or
an opening is provided between the first port and the second port of the flow-collecting section (311), and in a direction towards the flow-converging section (312), the second port of the flow-collecting section (311) close to the flow-converging section (312) is communicated with the flow-converging section (312), and the second ports of other flow-collecting sections (312) are sequentially communicated with the openings on adjacent flow-collecting sections (311).

11. The power battery system (1000) according to any one of claims 8 to 10, **characterized in that** the box (200) of the power battery system (1000) is provided with an assembly hole (21); wherein the explosion-proof valve (32) is mounted in the assembly hole (21); wherein a joint between the explosion-proof valve (32) and the assembly hole (21) is provided with a sealing structure (36).

12. The power battery system (1000) according to any of the claims 8 to 11, **characterized in that** a structural cover plate (33) is provided between the explosion-proof valve (32) and the flow-converging section (312); wherein the structural cover plate (33) is connected to the explosion-proof valve (32), and a flow-converging cavity (37) is formed between the structural cover plate (33) and the explosion-proof valve (32); wherein the flow-converging section (312) is in communication with the flow-converging cavity (37) via the structural cover plate (33).

13. The power battery system (1000) according to claim 12, **characterized in that** the structural cover plate (33) is provided with a pressure relief pipe (331); wherein one end of the pressure relief pipe (331) is in communication with the flow-converging section (312), and the other end of the pressure relief pipe (331) is in communication with the flow-converging cavity (37); or
the explosion-proof valve (32) is provided with an extension pipe (321), and the box (200) of the power battery system (1000) is provided with an assembly hole (21); wherein the extension pipe (21) passes through the assembly hole (21) from an outer side of the box (200), and is in a threaded connection with the structural cover plate (33) at an inner side of the box (200).

14. The power battery system (1000) according to claim 12, **characterized in that** an outer edge of the structural cover plate (33) extends to form a flange plate (332), and the structural cover plate (33) is fixedly connected to the box (200) via the flange plate (332).

15. The power battery system (1000) according to claim 14, **characterized in that** a sealing strip (38) is provided between the flange plate (332) and the box (200); wherein the sealing strip (38) is provided on a covering surface of the box (200) along the flange plate (332); wherein a surface of the flange plate (332) facing the sealing strip (38) is provided with position-limiting protrusions (334);
the flange plate (332) is mounted to the box (200) by bolts; wherein the flange plate (332) is provided with screw holes (333) through which the bolts pass, and the position-limiting protrusion (334) is provided along an aperture edge of the screw hole (333); the sealing strip (38) is provided with avoidance holes (381) at positions corresponding to the screw holes (333), and the position-limiting protrusions (334) are provided to pass through the avoidance holes (381).
